(19) Europäisches Patentamt
European Patent Office
Office européen des brevets

(11) **EP 3 111 103 B1**

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(21) Anmeldenummer: **15708434.4**

(22) Anmeldetag: **30.01.2015**

(51) Int Cl.:
**F16D 13/75** *(2006.01)*

(86) Internationale Anmeldenummer:
**PCT/DE2015/200048**

(87) Internationale Veröffentlichungsnummer:
**WO 2015/127930 (03.09.2015 Gazette 2015/35)**

(54) **REIBUNGSKUPPLUNG MIT KRAFTGESTEUERTER NACHSTELLEINRICHTUNG**

FRICTION CLUTCH HAVING A FORCE-CONTROLLED ADJUSTING DEVICE

EMBRAYAGE À FRICTION COMPRENANT UN DISPOSITIF DE RATTRAPAGE SERVOCOMMANDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014 DE 102014203513**

(43) Veröffentlichungstag der Anmeldung:
**04.01.2017 Patentblatt 2017/01**

(73) Patentinhaber: **Schaeffler Technologies AG & Co. KG**
**91074 Herzogenaurach (DE)**

(72) Erfinder: **DANNHÄUSER, Matthias**
**76534 Baden-Baden (DE)**

(56) Entgegenhaltungen:
**WO-A1-01/88400    CH-A- 241 487**
**DE-A1- 4 322 677    US-A- 5 230 413**

## Beschreibung

Die Erfindung betrifft eine Reibungskupplung mit einer Gegendruckplatte, einem mit der Gegendruckplatte verbundenen Kupplungsdeckel, einer axial gegenüber der Gegendruckplatte verlagerbaren und drehfest mit dieser mittels über den Umfang verteilter Blattfedern verbundenen Anpressplatte, einer Kupplungsscheibe mit axial zwischen Gegendruckplatte und Anpressplatte verspannbar angeordneten Reibbelägen, einer sich an einem dem Kupplungsdeckel zugeordneten Auflager axial abstützenden, die Anpressplatte gegen die Gegendruckplatte entgegen der Wirkung einer Belagfederkraft und einer Blattfederkraft im geschlossenen Zustand der Reibungskupplung unter Einstellung eines Reibschlusses zwischen der Gegendruckplatte und der Anpressplatte gegenüber den Reibbelägen mit einer Anpresskraft vorspannenden Tellerfeder, einer radial nach innen weisende Tellerfederzungen der Tellerfeder mit einer Ausrückkraft in Richtung Gegendruckplatte entgegen einer Sensorfederkraft einer zwischen Tellerfeder und Kupplungsgehäuse vorgespannten Sensorfeder zum Öffnen der Reibungskupplung verlagernden Ausrückvorrichtung sowie einer kraftgesteuerten, bei die Sensorfederkraft übersteigenden Ausrückkräften das Auflager an einen axialen Verschleiß der Reibbeläge angleichenden Nachstelleinrichtung.

Gattungsgemäße Reibungskupplungen mit einer kraftgesteuerten Nachstelleinrichtung sind beispielsweise aus den Dokumenten DE 42 39 291 A1, DE 43 06 505 A1, DE 42 39 289 A1 und DE 43 22 677 A1 bekannt. Hierbei stützt sich die Tellerfeder bei geschlossener Reibungskupplung und nicht vorhandenem Verschleiß unter Einstellung eines vorgegebenen Arbeitspunkts der Reibungskupplung an einem in Umfangsrichtung federbeaufschlagten Verstellring einer einen Verschleißabstand der Reibbeläge kompensierenden Rampeneinrichtung ab und blockiert dessen Verdrehung. Beim Öffnen der Reibungskupplung ohne vorhandenen Verschleiß stützt sich die Tellerfeder axial unter Beibehaltung der Blockade an einer Sensorfeder ab. Stellt sich aufgrund eines axialen Verschleißes der Reibbeläge die Tellerfeder auf, treten erhöhte Ausrückkräfte aus, die zu einem axialen Ausweichen der Sensorfeder führen. Hierdurch wird die Blockade des Verstellrings aufgehoben und der Verstellring verdreht sich mittels der Vorspannung der in Umfangsrichtung wirksamen Druckfedern, bis mittels der Rampeneinrichtung der Verschleißabstand ausgeglichen ist und der Verstellring wieder in Anlage an die Tellerfeder kommt und der korrekte Arbeitspunkt der Reibungskupplung wieder eingestellt ist.

Der Verlauf der Ausrückkraft muss dabei über den Ausrückweg degressiv verlaufen, so dass ein sogenannter Drop-Off auftritt. Desweiteren kann durch Eigenresonanz der Anpressplatte im geöffneten Zustand der Reibungskupplung, Erschütterung oder Vibrationen eine unerwünschte Nachstellung erfolgen. Das Dokument DE 43 22 677 A1 offenbart den Oberbegriff von Anspruch 1.

Aufgabe der Erfindung ist, eine Reibungskupplung mit einer kraftgesteuerten Nachstelleinrichtung vorzuschlagen, die gegenüber Erschütterungen, Vibrationen und Eigenresonanz robust ausgebildet ist.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Die vorgeschlagene Reibungskupplung enthält eine Gegendruckplatte, beispielsweise ein Schwungrad, eine Sekundärschwungmasse eines geteilten Schwungrads oder eine Zentralplatte einer Doppelkupplung zur Ausbildung von zwei Reibungskupplungen mit einer einzigen Gegendruckplatte oder dergleichen. Mit der Gegendruckplatte ist ein Kupplungsdeckel wie Kupplungsgehäuse verbunden, beispielsweise vernietet oder verschraubt. Gegenüber der Gegendruckplatte ist eine Anpressplatte drehfest und axial verlagerbar beispielsweise mittels über den Umfang verteilter Blattfedern an der Gegendruckplatte oder dem Kupplungsdeckel innerhalb des Kupplungsdeckels aufgenommen. Zwischen Reibflächen der Anpressplatte und Gegendruckplatte sind axial verspannbar axial verschleißbehaftete Reibbeläge einer Kupplungsscheibe vorgesehen, die über die Betriebsdauer von einem Neuzustand bis zu einem Verschleißzustand laufend an axialer Belagstärke verlieren und damit einen abnehmenden Verschleißabstand zwischen Gegendruckplatte und Anpressplatte bedingen. Zwischen zwei axial beabstandeten, jeweils einer Reibfläche der Gegendruckplatte und der Anpressplatte zugewandten Reibbelägen ist eine Belagfederung vorgesehen, die gegen eine Anpresskraft einer einen Reibschluss zwischen Reibbelägen und Gegendruck- und Anpressplatte bildenden Tellerfeder wirksam sind. Die Tellerfeder stützt sich im geschlossenen Zustand der Reibungskupplung axial an einem dem Kupplungsdeckel zugeordneten Auflager entgegen der Wirkung einer Belagfederkraft der Belagfederung und einer Blattfederkraft unter Einstellung des Reibschlusses ab, so dass ein maximal über die Reibungskupplung übertragbares Kupplungsmoment übertragen wird. Die Reibungskupplung wird geöffnet, indem radial nach innen weisende Tellerfederzungen der Tellerfeder von einer automatisiert oder mittels eines Kupplungspedals betätigten Ausrückvorrichtung mit einer Ausrückkraft entlang eines Ausrückwegs in Richtung Gegendruckplatte entgegen einer Sensorfederkraft einer zwischen Tellerfeder und Kupplungsgehäuse vorgespannten Sensorfeder in Richtung Gegendruckplatte axial verlagert werden.

Zur Kompensation eines Verschleißes der Reibbeläge und einer Kompensation des Verschleißabstands ist eine kraftgesteuerte Nachstelleinrichtung vorgesehen, bei der bei die Sensorfederkraft übersteigenden Ausrückkräften das Auflager an einen axialen Verschleiß der Reibbeläge kompensiert wird, indem das Auflager einem mit einer der Sensorfeder entgegen gerichteten Vorspannkraft vorgespannten und mittels eines Axialgewindes gegenüber dem Kupplungsdeckel axial und verdrehbar angeordneten Verstellring zugeordnet ist. Dies bedeutet, dass auf in Umfangsrichtung wirksame Energiespeicher und eine Rampeneinrichtung verzichtet wird und anstatt dessen der Verschleißausgleich mittels eines Axialgewindes erfolgt, das axial entgegen der Sensorfeder vorgespannt ist. Bei einer verschleißbedingt erhöhten Ausrückkraft weicht die Sensorfeder in Richtung Gegendruckplatte aus, so dass sich das Axialgewinde verdrehen kann, wodurch das dem Axialgewinde zugeordnete Auflager der Tellerfeder in Richtung Gegendruckplatte axial verlagert wird, bis dieses an der Tellerfeder wieder zur Anlage kommt und der entstandene Verschleißabstand wieder ausgeglichen ist und die Tellerfeder wieder ihre ursprüngliche Arbeitsposition mit ursprünglichen Ausrückkräften einnimmt.

In bevorzugter Weise nimmt dabei eine gegen die Sensorfederkraft gerichtete Vorspannung des Verstellrings eine axial wirksam zwischen Kupplungsdeckel und Verstellring verspannte Nachstelltellerfeder vor. Hierbei ist der Verstellring bevorzugt als der verdrehbare Teil des Axialgewindes ausgebildet und der andere Teil drehfest mit dem Kupplungsdeckel verbunden. Der andere, am Kupplungsdeckel ausgebildete Teil des Axialgewindes kann direkt in den Kupplungsdeckel eingerollt oder in ähnlicher Weise eingearbeitet sein. Desweiteren kann der andere Teil des Axialgewindes aus einem mit dem Kupplungsdeckel verbundenen Zwischenring gebildet sein. Hierbei kann der Zwischenring ein Außengewinde und der Verstellring ein Innengewinde aufweisen. Die Steigung des Axialgewindes ist auf die vorliegenden Kraftverhältnisse, beispielsweise der Vorspannkraft der Nachstelltellerfeder, der in der Nachstelleinrichtung vorliegenden Reibung, vorgesehene Nachstellzyklen und Nachstellhüben und dergleichen eingestellt. Beispielsweise kann eine Einstellung einer Verstellkraft $F_{VR}$ zur Verdrehung des Axialgewindes gemäß der Formel

$$F_{VR} = F_{Ax} * (\tan \alpha - \mu_{ges})$$

aus dem Produkt aus der Vorspannkraft $F_{Ax}$ der Nachstelltellerfeder und der Differenz aus dem Tangens des Steigungswinkels $\alpha$ des Axialgewindes und einem Reibkoeffizienten $\mu_{ges}$ des Axialgewindes samt der umgebenden Reibparameter beispielsweise zwischen Nachstellfeder und Kupplungsdeckel eingestellt sein. Hierbei ist die Verstellkraft $F_{VR}$ bei bevorzugten Steigungswinkeln $\alpha$ sehr viel kleiner als eine vorgebbare Vorspannkraft $F_{Ax}$, so dass quasi beliebig kleine Steigungswinkel $\alpha$ und damit hohe Auflösungen von Verschleißabständen erfasst und eingestellt werden können.

Der Verstellring ist bevorzugt im Querschnitt L-förmig mit einem kurzen, radial innen angeordneten Schenkel mit dem Innengewinde und einem langen Schenkel mit einem radial außen angeordneten, mittels über den Umfang angeordneten axial elastischen Armen mit dem kurzen Schenkel verbundenen Biegering ausgebildet. Das Auflager für die Tellerfeder kann im Bereich einer Kante des Verstellrings zwischen den beiden Schenkeln ausgebildet, beispielsweise angeformt sein. Die Arme bilden bevorzugt radiale, torsionselastische und in Umfangsrichtung ausgebildete axial elastische Bereiche aus. Hierbei bildet der Biegering über zumindest einen Teil eines Ausrückwegs der Reibungskupplung mit einem Kraftrand der Reibungskupplung einen Anlagekontakt aus und unterstützt mittels des Biegerands und der gegenüber dem Auflager elastisch ausgebildeten Arme eine die Tellerfeder am Kraftrand unterstützende Zusatzkraft aus. Der Anlagekontakt und das daraus resultierende Kraftverhalten sind dabei so eingestellt, dass die Zusatzkraft in einem Bereich eines Minimums einer Kraftkennlinie der Tellerfeder wirksam ist. Hierdurch kann der sogenannte Drop-Off einer Reibungskupplung vermindert werden, so dass über den Ausrückweg gleichmäßigere Ausrückkräfte eingestellt werden können.

Insgesamt können mittels der vorgeschlagenen Nachstelleinrichtung bei geöffneter Reibungskupplung höhere Anlagekräfte der Tellerfeder an der Anpressplatte vorgesehen werden, so dass die Gefahr einer unerwünschten Nachstellung verringert und die Eigenresonanz der Anpressplatte erhöht werden kann.

Mit anderen Worten kann die Vorspannkraft in der Tellerfederlagerung mittels der Vorspannkraft und der Sensorfederkraft gegenüber der Reibungskupplung mit in Umfangsrichtung angeordneten Verstellfedern des Verstellrings deutlich erhöht werden. Dies hat den Vorteil, dass sich die Kontaktbereiche der Nachstelleinrichtung auch in den Regelpunkten während einer Nachstellung vollständig im Eingriff befinden und damit robuster gegenüber dynamischen Vibrationen sowie der Eigenfrequenz der Anpressplatte verhalten.

Die statische Optimierung des Drop-Offs der Ausrückkraft erfolgt dabei zugleich in der Nachstelleinrichtung. Durch eine erhöhte Vorspannkraft in der Tellerfederlagerung kann bedingt durch das Kräftegleichgewicht ein Verstellringkragarm beispielsweise des Biegerings einen entsprechend erhöhten Krafteintrag gegenüber dem Kraftrand der Tellerfeder liefern, der das Ausrückkraftminimum der Kraftkennlinie der Tellerfeder erhöht.

Da mit dem bisherigen Druckfederkonzept mit über den Umfang angeordneten Druckfedern im Verhältnis zur Kraft gleichzeitig ein recht hohes Antriebsmoment auf den Verstellring wirkt, kann eine entsprechend höhere Vorspannkraft wie vorgeschlagen nicht vorgesehen werden, da eine Erhöhung des auf den Verstellring wirkenden Momentes ein unerwünschtes Nachstellen der Nachstelleinrichtung begünstigt. In der vorgeschlagenen Nachstelleinrichtung wird daher eine axial wirkende Nachstelltellerfeder eingesetzt. Der Verstellring ist über ein Axialgewinde mit dem Kupplungsdeckel verbunden. Dessen Steigung wird vorteilhafterweise so abgestimmt, dass unter Ausschluss einer Selbsthemmung das erforderliche Antriebsmoment mittels der Vorspannkraft der Nachstelltellerfeder erreicht wird. Das Antriebsmoment kann bei höherer Vorspannkraft durch eine reduzierte Gewindesteigung wieder ausgeglichen werden.

An der vorgeschlagenen Reibungskupplung ist weiterhin vorteilhaft, dass gegenüber herkömmlichen Reibungskupplungen mit Rampeneinrichtungen am Kupplungsdeckel und an dem Verstellring derartige Rampeneinrichtungen in dem Kupplungsdeckel und im Verstellring vermieden werden können und damit ungünstige Toleranzsituationen wie Höhentoleranz und Ebenheit/Parallelität der Rampen, die aufgrund der hohen Anzahl von Rampen fertigungstechnisch vorgegeben sind, umgangen werden können. In der vorgeschlagenen Reibungskupplung sind Kupplungsdeckel und Verstellring rampenlos ausgebildet. Der Verstellring wird über das Axialgewinde an einem mit dem Kupplungsdeckel verbundenen Zwischenring mit dem Kupplungsdeckel verschraubt. Dabei spannt sich die Nachstelltellerfeder im Kupplungsdeckel vor. Die Nachstellkraft wird dabei nach dem Prinzip einer Bewegungsschraube mit einem Steigungswinkel größer einem Reibungswinkel auf den Verstellring übertragen. Das heißt, die axial eingeleitete Vorspannkraft der Nachstelltellerfeder wird durch das Axialgewinde in eine Drehbewegung umgewandelt.

Der Einfluss der vorgeschlagenen Kombination der Nachstelleinrichtung mit einem Axialgewinde, einer axial wirksamen Nachstelltellerfeder und eines Verstellrings mit gegebenenfalls an dem Kraftrand anliegenden Biegering erhöht die axiale Vorspannkraft gegenüber den mit einer Rampeneinrichtung und über den Umfang angeordneten, den Verstellring in Umfangsrichtung antreibenden Druckfedern deutlich, beispielsweise um das 10-fache. Hierdurch kann durch entsprechende Auslegung der Tellerfeder der Drop-Off der Ausrückkraftkennlinie beispielsweise um 200 N reduziert werden.

Weiterhin kann der Verlauf der Eigenfrequenzen der Anpressplatte bei geöffneter Reibungskupplung über den Ausrückweg gleichmäßig beispielsweise bei größer gleich 200 Hz stabilisiert werden und damit ein Einbruch in einem Bereich um den Regelpunkt der Nachstellung der Nachstelleinrichtung vermieden werden. Mit der höheren Vorspannung der Tellerfeder durch die Sensorfeder und Nachstellfeder wird zugleich ein Auslegungsspielraum der Reibungskupplung beispielsweise in Form von der Masse der Anpressplatte, der Steifigkeit der Kupplungsbestandteile, der Übersetzung des Axialgewindes und dergleichen vergrößert.

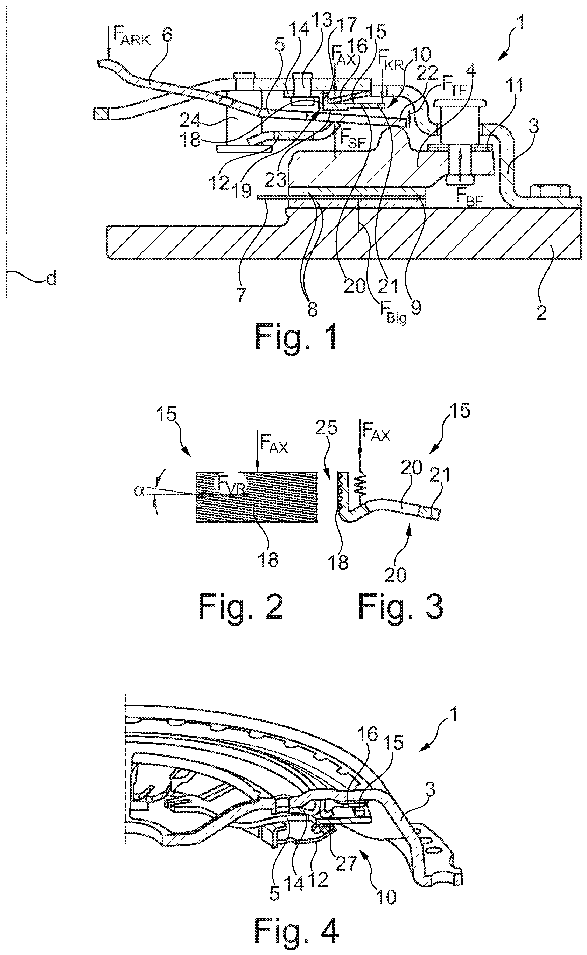

Die Erfindung wird anhand des in den Figuren 1 bis 8 dargestellten Ausführungsbeispiels näher erläutert. Dabei zeigen:

| | |
|---|---|
| Figur 1 | eine Reibungskupplung mit Nachstelleinrichtung im Teilschnitt, |
| Figur 2 | eine Teilansicht auf das Axialgewinde des Verstellrings der in Figur 1 dargestellten Reibungskupplung, |
| Figur 3 | einen Teilschnitt durch den Verstellring der in der Figur 1 dargestellten Reibungskupplung, |
| Figur 4 | eine geschnittene 3D-Teilansicht der Reibungskupplung der Figur 1, |
| Figur 5 | eine Explosionsdarstellung der Nachstelleinrichtung der Reibungskupplung der Figur 1 in geschnittener 3D-Teilansicht, |
| Figur 6 | den Zwischenring der Reibungskupplung der Figur 1 in 3D-Ansicht mit Detail, |
| Figur 7 | den Verstellring der Reibungskupplung der Figur 1 in 3D-Ansicht mit Detail |
| und Figur 8 | die Nachstelltellerfeder der Reibungskupplung der Figur 1 in 3D-Ansicht. |

Die Figur 1 zeigt die um die Drehachse d angeordnete Reibungskupplung 1 im Teilschnitt mit der Gegendruckplatte 2, dem mit dieser verbundenen wie verschraubten Kupplungsdeckel 3, der Anpressplatte 4, der Tellerfeder 5 mit den nach radial innen erweiterten Tellerfederzungen 6 und der nur teilweise dargestellten Kupplungsscheibe 7 mit den miteinander mittels der Belagfederung 9 verbundenen Reibbelägen 8 und der Nachstelleinrichtung 10. Die Anpressplatte 4 ist mittels der über den Umfang verteilten, tangential ausgerichteten Blattfedern 11 beispielsweise in Form von Blattfederpaketen drehfest und axial verlagerbar mit der Gegendruckplatte 2 und dem Kupplungsdeckel 3 verbunden.

Die schematisch dargestellte Nachstelleinrichtung 10 ist aus der Sensorfeder 12, dem an dem Kupplungsdeckel 3 mittels der Niete 13 verbundenen Zwischenring 14, dem Verstellring 15 und der axial zwischen Kupplungsdeckel 3 und Verstellring 15 verspannten Nachstelltellerfeder 16 gebildet. Mittels des Außengewindes 17 und Innengewindes 18 bilden der Zwischenring 14 und der Verstellring 15 das Axialgewinde 19 aus. Der Verstellring 15 weist radial außen den mit den über den Umfang angeordneten Armen 20 verbundenen Biegering 21 auf.

Die Tellerfeder 5 stützt sich in dem dargestellten geschlossenen Zustand der Reibungskupplung 1 mit ihrem Kraftrand 22 an dem Auflager 23 des Verstellrings 15 und damit über das Axialgewinde 19 und den Zwischenring 14 axial an dem Kupplungsdeckel 3 ab und spannt die Anpressplatte 4 gegen die Gegendruckplatte 2 vor, so dass sich zwischen Gegendruckplatte 2 und Anpressplatte 4 einerseits und den Reibbelägen 8 andererseits ein Reibschluss bildet. An dem Arbeitspunkt der geschlossenen Reibungskupplung 1 stellt sich dabei ein Kräftegleichgewicht aus der entgegen der auf die Anpressplatte 4 wirksamen Anpresskraft $F_{TF}$ wirksamen Belagfederkraft $F_{Blg}$ der Belagfederung 9 und der Blattfederkraft $F_{BF}$ ein. Die Tellerfeder 5 ist mittels der Sensorfederkraft $F_{SF}$ und der gegen diese wirksame Vorspannkraft $F_{Ax}$ der Nachstelltellerfeder 16 an ihrem Hebelpunkt am Auflager 23 stabilisiert. Die Sensorfeder 12 stützt sich dabei mittels der die Tellerfederzungen 6 durchgreifenden, an dem Kupplungsdeckel 3 befestigten Rastbolzen 24 der Tellerfeder 5 gegenüberliegend gehäuseseitig axial ab und ist auf der dem Auflager 23 gegenüber liegenden Seite mit der Tellerfeder 5 auf radial gleicher Höhe verspannt. An dem dargestellten Arbeitspunkt ist die Tellerfeder 5 durch die vorgegebenen Kräfte- und Hebelverhältnisse auf die gezeigte Position eingespannt und die Tellerfederzungen sind entsprechend aufgestellt.

Um die Reibungskupplung 1 zu öffnen, das heißt, den Reibschluss zwischen der Gegendruckplatte 2 und der Anpressplatte 4 und den Reibbelägen 8 zu lösen, bringt die nicht dargestellte Ausrückvorrichtung die Ausrückkraft $F_{ARK}$ auf die Tellerfederzungen 6 in Richtung Gegendruckplatte 2 auf. Hierdurch wirkt im nicht nachstellenden Zustand die ausreichend steife Sensorfeder 12 als Hebelpunkt, so dass der Kraftrand 22 in die entgegengesetzte Richtung verlagert wird und die Anpressplatte 4 unterstützt von der Belagfederkraft $F_{Blg}$ und der Blattfederkraft $F_{BF}$ abhebt. Aufgrund der größeren Sensorfederkraft $F_{SF}$ als die Vorspannkraft $F_{Ax}$ in Verbindung mit der eingestellten Steigung und Reibung des Axialgewindes 19, bleibt dieses unverändert. Das Kräftegleichgewicht zwischen Sensorfederkraft $F_{SF}$ und Vorspannkraft $F_{Ax}$ ist dabei so stark ausgelegt, dass eine Eigenfrequenz der Anpressplatte 4 im geöffneten Zustand der Reibungskupplung 1 keine Verstellung der Nachstelleinrichtung 10 bewirken kann.

Im Bereich von Ausrückwegen der Reibungskupplung 1 mit abnehmender Ausrückkraft $F_{ARK}$ aufgrund der typischen Kraftkennlinie der Tellerfeder 5 in Form eines Drop-Offs tritt der Biegering 21 in Anlagekontakt mit dem Kraftrand 22. Dieser als Kragarm aus den Armen 20 und dem Biegering 21 ausgebildete Teil bringt auf den Kraftrand 22 die Kragkraft $_{KR}$ auf und erhöht damit die Ausrückkraft $F_{ARK}$, so dass insgesamt über den gesamten Ausrückweg eine besser ausgeglichene Ausrückkraft $F_{ARK}$ mit verringertem Drop-Off erzielt wird.

Nimmt aufgrund von Verschleiß der Reibbeläge 8 der axiale Abstand wie Verschleißabstand zwischen Gegendruckplatte 2 und Anpressplatte 4 im geschlossenen Zustand der Reibungskupplung 1 ab, ändert sich der Arbeitspunkt der Reibungskupplung 1 und die Kräfte- und Hebelverhältnisse ändern sich. Die Tellerfeder 5 neigt sich stärker zwischen ihren Einspannpunkten an der Anpressplatte 4 und dem Auflager 23. Infolgedessen stellen sich die Tellerfederzungen stärker auf, das heißt, sie wandern von der Gegendruckplatte weg. Hierdurch steigt mit zunehmendem Verschleiß der Reibbeläge 8 kontinuierlich die Ausrückkraft $F_{ARK}$, bis diese schließlich so hoch wird, dass die Sensorfederkraft $F_{SF}$ nicht mehr ausreicht, um die Tellerfeder 5 steif abzustützen. Diese gibt daraufhin axial nach, so dass das Auflager 23 entlastet wird und sich ein geringes, dem Verschleiß der Reibbeläge entsprechendes Spiel zur Tellerfeder einstellt. Die Vorspannkraft $F_{Ax}$ verdreht danach den Verstellring 15 im Axialgewinde 19. Hierdurch wird das Auflager 23 axial an der Tellerfeder 5 nachgeführt, bis das Spiel abgebaut wird. Beim nächsten Schließen der Reibungskupplung 1 nimmt die Reibungskupplung 1 beziehungsweise die Tellerfeder 5 wieder den ursprünglichen Arbeitspunkt ein.

Die Figuren 2 und 3 geben Teile des konstruktiv ausgebildeten Verstellrings 15 wieder. Der Verstellring 15 ist im Querschnitt L-förmig mit einem radial inneren, kurzen Schenkel 25 und einem radial erweiterten langen Schenkel 26 ausgebildet. Zwischen den Schenkeln 25, 26 ist das Auflager 23 an der Ringkante des Verstellrings 15 vorgesehen. Der kurze Schenkel 25 weist das Innengewinde 18 mit der Steigung $\alpha$ auf. Abhängig von der Steigung $\alpha$ und der Reibung erfolgt auf die Vorspannkraft $F_{Ax}$ der schematisch dargestellten Nachstelltellerfeder 16 eine Verdrehung des Verstellrings 15 im Axialgewinde 19 (Figur 1) mit der Verstellkraft $F_{VR}$. Der lange Schenkel 26 enthält den Biegering 21, der mittels der Arme 20 mit dem kurzen Schenkel 25 verbunden ist.

Die Figur 4 zeigt in geschnittener 3D-Ansicht die Reibungskupplung 1 ohne Gegendruckplatte 2 und Anpressplatte 4 in konstruktiver Ausbildung mit dem Kupplungsdeckel 3, der Tellerfeder 5 und der Nachstelleinrichtung 10 mit der Sensorfeder 12, dem Zwischenring 14, dem Verstellring 15 und der Nachstelltellerfeder 16. Der Kupplungsdeckel 3 ist der Übersicht halber transparent dargestellt. Die Sensorfeder 12 ist mittels des Drahtrings 27 gegen die Tellerfeder 5 verspannt.

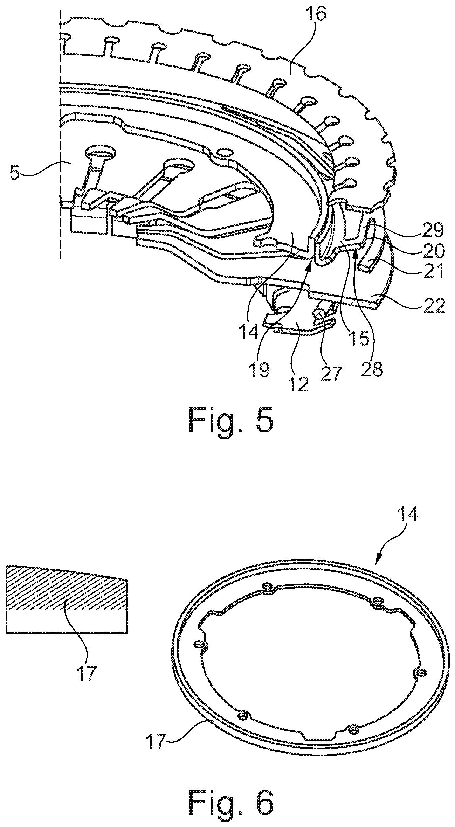

Die Figur 5 zeigt unter Weglassung des Kupplungsdeckels 3 die entsprechende, in Figur 4 dargestellte, um die Tellerfeder 5 angeordnete Nachstelleinrichtung 10 in Explosionsdarstellung mit der Sensorfeder 12, dem zwischen Tellerfeder 5 und der Sensorfeder 12 angeordneten Drahtring 27, dem Zwischenring 14, dem Verstellring 15 und der Nachstelltellerfeder 16. Sämtliche Bauteile der Nachstelleinrichtung 10 sind aus Blech hergestellt und entsprechend gestanzt und umgeformt. Das Axialgewinde 19 ist aus jeweils axialen umgeformten Bereichen des Zwischenrings 14 und des Verstellrings 15. Der Verstellring 15 weist den Biegering 21 auf, der zum Abbau eines Drop-Offs der Tellerfeder 5 bei entsprechenden Ausrückwegen in Anlagekontakt zum Kraftrand 22 der Tellerfeder 5 tritt. Zur axial elastischen Ankopplung und Übertragung der Kragkräfte auf den Kraftrand 22 weisen die über den Umfang verteilten Arme 20 torsionselastische, radial ausgerichtete Bereiche 28 und axial elastische, in Umfangsrichtung verlaufende Bereiche 29 auf.

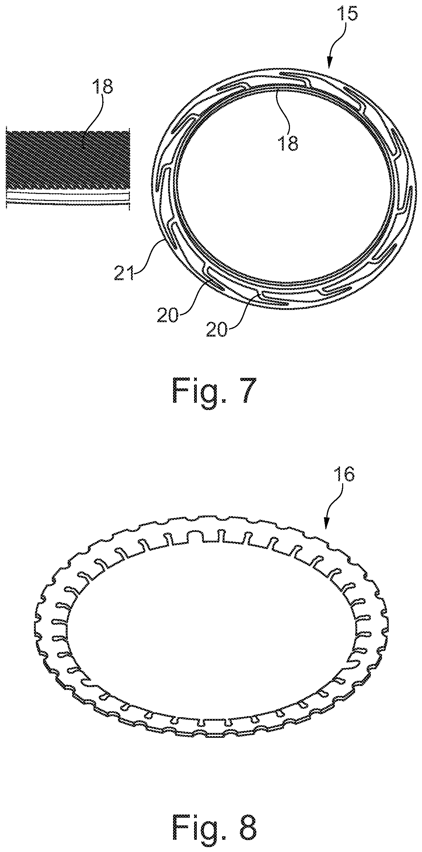

Die Figur 6 zeigt den Zwischenring 14 mit dem axial umgeformten, im Detail dargestellten Außengewinde 17 in 3D-Ansicht. In derselben Darstellung zeigen die Figur 7 den Verstellring 15 mit dem Biegering 21, den Armen 20 und dem im Detail dargestellten Innengewinde 18 und die Figur 8 die Nachstelltellerfeder 16 in konstruktiver Ausbildung.

**Bezugzeichenliste**

1    Reibungskupplung

| 2 | Gegendruckplatte |
|---|---|
| 3 | Kupplungsdeckel |
| 4 | Anpressplatte |
| 5 | Tellerfeder |
| 6 | Tellerfederzunge |
| 7 | Kupplungsscheibe |
| 8 | Reibbelag |
| 9 | Belagfederung |
| 10 | Nachstelleinrichtung |
| 11 | Blattfeder |
| 12 | Sensorfeder |
| 13 | Niet |
| 14 | Zwischenring |
| 15 | Verstellring |
| 16 | Nachstelltellerfeder |
| 17 | Außengewinde |
| 18 | Innengewinde |
| 19 | Axialgewinde |
| 20 | Arm |
| 21 | Biegering |
| 22 | Kraftrand |
| 23 | Auflager |
| 24 | Rastbolzen |
| 25 | Schenkel |
| 26 | Schenkel |
| 27 | Drahtring |
| 28 | Bereich |
| 29 | Bereich |
| d | Drehachse |
| $F_{ARK}$ | Ausrückkraft |
| $F_{Ax}$ | Vorspannkraft |
| $F_{BF}$ | Blattfederkraft |
| $F_{Blg}$ | Belagfederkraft |
| $F_{KR}$ | Kragkraft |
| $F_{SF}$ | Sensorfederkraft |
| $F_{TF}$ | Anpresskraft |
| $F_{VR}$ | Verstellkraft |
| $\alpha$ | Steigung |

**Patentansprüche**

1. Reibungskupplung (1) mit einer Gegendruckplatte (2), einem mit der Gegendruckplatte (2) verbundenen Kupplungsdeckel (3), einer axial gegenüber der Gegendruckplatte (2) verlagerbaren und drehfest mit dieser mittels über den Umfang verteilter Blattfedern (11) verbundenen Anpressplatte (4), einer Kupplungsscheibe (7) mit axial zwischen Gegendruckplatte (2) und Anpressplatte (4) verspannbar angeordneten Reibbelägen (8), einer sich an einem dem Kupplungsdeckel (3) zugeordneten Auflager (23) axial abstützenden, die Anpressplatte (4) gegen die Gegendruckplatte (2) entgegen der Wirkung einer Belagfederkraft ($F_{Blg}$) und einer Blattfederkraft ($F_{BF}$) im geschlossenen Zustand der Reibungskupplung (1) unter Einstellung eines Reibschlusses zwischen der Gegendruckplatte (2) und der Anpressplatte (4) gegenüber den Reibbelägen (8) mit einer Anpresskraft ($F_{TF}$) vorspannenden Tellerfeder (5), einer radial nach innen weisende Tellerfederzungen (6) der Tellerfeder (5) mit einer Ausrückkraft ($F_{ARK}$) in Richtung Gegendruckplatte (2) entgegen einer Sensorfederkraft ($F_{SF}$) einer zwischen Tellerfeder (5) und Kupplungsgehäuse (3) vorgespannten Sensorfeder (12) zum Öffnen der Reibungskupplung (1) verlagernden Ausrückvorrichtung sowie einer kraftgesteuerten, bei die Sensorfederkraft ($F_{SF}$) übersteigenden Ausrückkräften ($F_{ARK}$) das Auflager (23) an einen axialen Verschleiß der Reibbeläge (8) angleichenden Nachstelleinrichtung (10), **dadurch gekennzeichnet, dass** das Auflager (23) einem mit einer der Sensorfeder (12) entgegen gerichteten Vorspannkraft ($F_{Ax}$) vorgespannten und mittels eines Axialgewindes (19) gegenüber dem Kupplungsdeckel (3) axial und verdrehbar angeordneten Verstellring (15) zugeordnet ist.

2. Reibungskupplung (1) nach Anspruch 1, **dadurch gekennzeichnet, dass** eine zwischen Kupplungsdeckel (3) und Verstellring (15) axial verspannte Nachstelltellerfeder (16) zur Bereitstellung der Vorspannkraft ($F_{Ax}$) vorgesehen ist.

3. Reibungskupplung (1) nach Anspruch 1 oder 2, **dadurch gekennzeichnet, dass** das Axialgewinde (19) aus einem mit dem Kupplungsdeckel (3) verbundenen Zwischenring (14) und dem Verstellring (15) ausgebildet ist.

4. Reibungskupplung (1) nach Anspruch 3, **dadurch gekennzeichnet, dass** der Zwischenring (14) ein Außengewinde (17) und der Verstellring (15) ein Innengewinde (18) aufweist.

5. Reibungskupplung (1) nach einem der Ansprüche 1 bis 4, **dadurch gekennzeichnet, dass** das Axialgewinde (19) nicht selbsthemmend ausgebildet ist.

6. Reibungskupplung (1) nach einem der Ansprüche 2 bis 5, **dadurch gekennzeichnet, dass** eine Einstellung einer Verstellkraft ($F_{VR}$) zur Verdrehung des Axialgewindes (19) kleiner als das Produkt aus der Vorspannkraft ($F_{Ax}$) der Nachstelltellerfeder (16) und der Differenz aus dem Tangens der Steigung ($\alpha$) des Axialgewindes (19) und einem Reibkoeffizienten des Axialgewindes (19) vorgesehen ist.

7. Reibungskupplung (1) nach einem der Ansprüche 2 bis 6, **dadurch gekennzeichnet, dass** der Verstellring (15) im Querschnitt L-förmig mit einem kurzen, radial innen angeordneten Schenkel (25) mit dem Innengewinde (18) und einem langen Schenkel (26) mit einem radial außen angeordneten, mittels über den Umfang angeordneter axial elastischer Arme (20) mit dem kurzen Schenkel (25) verbundenen Biegering (21) und in einem Übergangsbereich der Schenkel (25, 26) vorgesehenen Auflager (23) ausgebildet ist.

8. Reibungskupplung (1) nach Anspruch 7, **dadurch gekennzeichnet, dass** der Biegering (21) über zumindest einen Teil eines Ausrückwegs der Reibungskupplung (1) mit einem Kraftrand (22) der Tellerfeder (5) einen Anlagekontakt bildet.

9. Reibungskupplung (1) nach Anspruch 7 oder 8, **dadurch gekennzeichnet, dass** der Biegering (21) zumindest über einen Teil eines Ausrückwegs die Tellerfeder (5) mit einer die Ausrückkraft ($F_{ARK}$) verstärkenden Kragkraft ($F_{KR}$) beaufschlagt.

10. Reibungskupplung (1) nach Anspruch 9, **dadurch gekennzeichnet, dass** die Kragkraft ($F_{KR}$) in einem Bereich eines Minimums einer Kraftkennlinie der Tellerfeder (5) wirksam ist.

## Claims

1. Friction clutch (1) having a counter-pressure plate (2), a clutch cover (3) which is connected to the counter-pressure plate (2), a pressure plate (4) which can be moved axially with respect to the counter-pressure plate (2) and is connected fixedly to the latter so as to rotate with it by means of leaf springs (11) which are distributed over the circumference, a clutch disc (7) with friction linings (8) which are arranged axially such that they can be clamped between the counter-pressure plate (2) and the pressure plate (4), a cup spring (5) which is supported axially on a rest (23) which is assigned to the clutch cover (3), and prestresses the pressure plate (4) with respect to the friction linings (8) by way of a pressing force ($F_{TF}$), against the counter-pressure plate (2) counter to the action of a lining spring force ($F_{Blg}$) and a leaf spring force ($F_{BF}$) in the closed state of the friction clutch (1) with setting of a frictionally locking connection between the counter-pressure plate (2) and the pressure plate (4), a release apparatus which moves radially inwardly pointing cup spring tongues (6) of the cup spring (5) for opening the friction clutch (1) by way of a release force ($F_{ARK}$) in the direction of the counter-pressure plate (2) counter to a sensor spring force ($F_{SF}$) of a sensor spring (12) which is prestressed between the cup spring (5) and the clutch housing (3), and a force-controlled adjusting device (10) which adapts the rest (23) to axial wear of the friction linings (8) in the case of release forces ($F_{ARK}$) which exceed the sensor spring force ($F_{SF}$), **characterized in that** the rest (23) is assigned an adjusting ring (15) which is prestressed with a prestressing force ($F_{Ax}$) directed counter to the sensor spring (12) and is arranged axially and rotatably with respect to the clutch cover (3) by means of an axial thread (19).

2. Friction clutch (1) according to Claim 1, **characterized in that** an adjusting cup spring (16) which is clamped axially between the clutch cover (3) and the adjusting ring (15) is provided for producing the prestressing force ($F_{Ax}$).

3. Friction clutch (1) according to Claim 1 or 2, **characterized in that** the axial thread (19) is configured from the adjusting ring (15) and an intermediate ring (14) which is coupled to the clutch cover (3).

4. Friction clutch (1) according to Claim 3, **characterized in that** the intermediate ring (14) has an external thread (17) and the adjusting ring (15) has an internal thread (18).

5. Friction clutch (1) according to one of Claims 1 to 4, **characterized in that** the axial thread (19) is configured so as to not be self-locking.

6. Friction clutch (1) according to one of Claims 2 to 5, **characterized in that** the setting of an adjusting force ($F_{VR}$) for rotating the axial thread (19) is provided to be smaller than the product of the prestressing force ($F_{Ax}$) of the adjusting cup spring (16) and the difference of the tangent of the pitch ($\alpha$) of the axial thread (19) and a coefficient of friction of the axial thread (19).

7. Friction clutch (1) according to one of Claims 2 to 6, **characterized in that** the adjusting ring (15) is configured in cross section in an L-shaped manner with a short limb (25) which is arranged radially on the inside with the internal thread (18), and a long limb (26) with a bending ring (21) which is arranged radially on the outside and is connected to the short limb (25) by means of axially elastic arms (20) which are arranged over the circumference, and a rest (23) which is provided in a transition region of the limbs (25, 26).

8. Friction clutch (1) according to Claim 7, **characterized in that** the bending ring (21) makes bearing contact with a force edge (22) of the cup spring (5) over at least part of a release travel of the friction clutch (1).

9. Friction clutch (1) according to Claim 7 or 8, **characterized in that** the bending ring (21) loads the cup spring (5) at least over part of a release travel with a cantilevered force ($F_{KR}$) which boosts the release force ($F_{ARK}$).

10. Friction clutch (1) according to Claim 9, **characterized in that** the cantilevered force ($F_{KR}$) is active in a range of a minimum of a force characteristic of the cup spring (5).

## Revendications

1. Embrayage à friction (1) comportant un plateau de contre-pression (2), un couvercle d'embrayage (3) assemblé au plateau de contre-pression (2), un plateau de pression (4) déplaçable axialement par rapport au plateau de contre-pression (2) et solidaire en rotation de celui-ci au moyen de ressorts à lame (11) répartis sur la périphérie, un disque d'embrayage (7) avec des garnitures de friction (8) disposées de façon à être serrées axialement entre le plateau de contre-pression (2) et le plateau de pression (4), une rondelle élastique (5) prenant appui axialement sur un support (23) tourné vers le couvercle d'embrayage (3), serrant le plateau de pression (4) contre le plateau de contre-pression (2) avec une force de pression ($F_{TF}$) contre l'action d'une force élastique des garnitures ($F_{Blg}$) et une force de ressort à lame ($F_{BF}$) dans l'état fermé de l'embrayage à friction (1) avec réglage d'une friction entre le plateau de contre-pression (2) et le plateau de pression (4) par rapport aux garnitures de friction (8), un dispositif de débrayage déplaçant des lamelles de rondelle élastique orientées vers l'intérieur (6) de la rondelle élastique (5) avec une force de débrayage ($F_{ARK}$) en direction du plateau de contre-pression (2) contre une force élastique de capteur ($F_{SF}$) d'un ressort de capteur (12) serré entre la rondelle élastique (5) et le boîtier de l'embrayage (3) pour l'ouverture de l'embrayage à friction (1) ainsi qu'un dispositif de rattrapage servocommandé (10), équilibrant le support (23) à une usure axiale des garnitures de friction (8) en cas de forces de débrayage ($F_{ARK}$) dépassant la force élastique de capteur ($F_{SF}$), **caractérisé en ce que** le support (23) est associé à un anneau de réglage (15) précontraint avec une force de précontrainte ($F_{Ax}$) dirigée à l'encontre du ressort de capteur (12) et disposé axialement et de façon rotative au moyen d'un filet axial (19) par rapport au couvercle d'embrayage (3).

2. Embrayage à friction (1) selon la revendication 1, **caractérisé en ce qu'**il est prévu une rondelle élastique de rattrapage (16) serrée axialement entre le couvercle d'embrayage (3) et l'anneau de réglage (15) pour la fourniture de la force de précontrainte ($F_{Ax}$).

3. Embrayage à friction (1) selon la revendication 1 ou 2, **caractérisé en ce que** le filet axial (19) est formé d'un anneau intermédiaire (14) assemblé au couvercle d'embrayage (3) et de l'anneau de réglage (15).

4. Embrayage à friction (1) selon la revendication 3, **caractérisé en ce que** l'anneau intermédiaire (14) présente un filet extérieur (17) et l'anneau de réglage (15) présente un filet intérieur (18).

5. Embrayage à friction (1) selon l'une quelconque des revendications 1 à 4, **caractérisé en ce que** le filet axial (19) n'est pas autobloquant.

6. Embrayage à friction (1) selon l'une quelconque des revendications 2 à 5, **caractérisé en ce qu'**il est prévu un réglage d'une force de déplacement ($F_{VR}$) pour la rotation du filet axial (19) inférieur au produit de la force de précontrainte ($F_{Ax}$) du ressort de rattrapage (16) et de la différence entre la tangente à la pente ($\alpha$) du filet axial (19) et un coefficient de friction du filet axial (19).

7. Embrayage à friction (1) selon l'une quelconque des revendications 2 à 6, **caractérisé en ce que** l'anneau de réglage (15) est réalisé en forme de L en section transversale, avec une branche courte (25) disposée radialement à l'intérieur avec le filet intérieur (18) et une branche longue (26) avec un anneau coudé (21) disposé radialement à l'extérieur, relié à la branche courte (25) au moyen de bras axialement élastiques (20) disposés sur la périphérie, et un support (23) prévu dans la région de transition des branches (25, 26).

8. Embrayage à friction (1) selon la revendication 7, **caractérisé en ce que** l'anneau coudé (21) forme un contact d'appui avec un bord de poussée (22) de la rondelle élastique (5) sur au moins une partie d'une course de débrayage de l'embrayage à friction (1).

9. Embrayage à friction (1) selon la revendication 7 ou 8, **caractérisé en ce que** l'anneau coudé (21) pousse la rondelle élastique (5) avec une force déportée ($F_{KR}$) renforçant la force de débrayage ($F_{ARK}$) sur au moins une partie de la course de débrayage.

10. Embrayage à friction (1) selon la revendication 9, **caractérisé en ce que** la force déportée ($F_{KR}$) est active dans une région d'un minimum d'une courbe caractéristique de la force de la rondelle élastique (5).

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4239291 A1
- DE 4306505 A1

- DE 4239289 A1
- DE 4322677 A1